# EUROPÄISCHE PATENTSCHRIFT

(11) **EP 1 222 721 B1**
(45) Veröffentlichungstag und Bekanntmachung des Hinweises auf die Patenterteilung: **21.05.2003**
(21) Anmeldenummer: 00983050.6
(22) Anmeldetag: 20.10.2000
(51) Int. Cl.: H02G 1/06, G02B 6/44

(54) **FÜHRUNGSBOGEN**
GUIDING ARC
ARC DE GUIDAGE

(30) Priorität: 20.10.1999 DE 19950544
(43) Veröffentlichungstag der Anmeldung: 17.07.2002
(73) Patentinhaber: CCS Technology, Inc., Wilmington, DE 19803 (US)
(72) Erfinder: DOTZER, Peter, 82335 Berg/Höhenrain (DE); DIERMEIER, Heinz, 85540 Haar (DE); MAYR, Ernst, 82319 Starnberg (DE)
(74) Vertreter: Epping Hermann & Fischer
(86) Internationale Anmeldenummer: DE0003732
(87) Internationale Veröffentlichungsnummer: WO01029947

(56) Entgegenhaltungen:
- CH-A- 649 657
- DE-A- 2 919 980
- FR-A- 2 719 356
- US-A- 5 530 787

## Beschreibung

Die Erfindung betrifft einen Führungsbogen mit wenigstens einer Führungsrille zur Aufnahme und Umlenkung eines langgestreckten Objektes, insbesondere eines Nachrichtenkabels.

Ein derartiger Führungsbogen gemäß dem Oberbegriff des Anspruchs 1 ist in DE 29 19 980 A beschrieben.

Bekanntlich werden heutzutage Kanalrohre auch dazu benutzt, Nachrichtenkabel, beispielsweise Lichtwellenleiterkabel, zu verlegen. Bei der Kabelverlegung in Rohren von Abwasserkanälen wird das Nachrichtenkabel in einem Einstieg von der Horizontalen in die Vertikale geführt und abgespannt. Zum Umlenken der Nachrichtenkabel von der Horizontalen in die Vertikale dient ein sogenannter Kabelführungsbogen oder Gleitbogen, der im Einstiegsschacht so positioniert wird, dass die Kabelführungsrille bündig mit dem oberen Scheitelpunkt des Kanalrohres verläuft. Ein solcher Kabelführungsbogen hat eine Führungsrille für das Nachrichtenkabel, so dass dieses nur mit dem zulässigen Biegeradius von der Horizontalen in die Vertikale umgelenkt und im eingebauten Zustand an der betreffenden Stelle geführt wird. Der Kabelführungsbogen verbleibt somit permanent an dem oberen Scheitelpunkt des Kanalrohres montiert und sollte auch nicht bei Reinigungs- und Wartungsarbeiten an dem Kanalrohr umgebaut oder entfernt werden müssen.

Kanalrohre beispielsweise von Abwasserkanälen müssen von Zeit zu Zeit gereinigt oder auch repariert werden. Die Reinigung wird gewöhnlich von Reinigungsfahrzeugen aus mit einem Hochdruckschlauch durchgeführt, während gelegentliche Reparaturen von Kanalrohr-Robotern durchgeführt werden, die über ein Kabel mit einer Leitstelle verbunden sind. Die Reinigungs- und Reparaturarbeiten müssen im Kanalrohr durchgeführt werden, während dort Kabelsysteme, beispielsweise Nachrichtenkabelsysteme verlegt sind. Daher muß man bei den erforderlichen Reinigungs- und Wartungsarbeiten dafür Sorge tragen, dass die Nachrichtenkabel nicht beschädigt werden.

Bei einem Reinigungsvorgang wird der Hochdruckschlauch, an dessen Anfang eine Reinigungsdüse angebracht ist, in das Kanalrohr eingebracht. Während des Reinigungsvorganges zieht sich der Hochdruckschlauch durch einen nach hinten gerichteten Wasserstrahl in das Kanalrohr. Nach Abschluß der Reinigungsarbeiten wird der Hochdruckschlauch hydraulisch zurückgezogen. Dabei besteht die Gefahr, dass der Schlauch selbst oder andere im Kanalrohr vorhandene Installationen beschädigt werden.

Um den Hochdruckschlauch für die Kanalreinigung oder das Kabel für den Kanalrohr-Roboter in das Abwasserrohr einzuführen, werden bisher spezielle Umlenkrollen oder Rollenbögen verwendet, über die der Hochdruckschlauch beziehungsweise das Steuerkabel für den Roboter so in das Kanalrohr eingeführt werden, dass möglichst keine Einwirkung auf die Nachrichtenkabel stattfindet. Die Umlenkrollen oder Rollenbögen werden entweder über oder neben den Kabelführungsbogen für die Nachrichtenkabel angeordnet. In der Praxis gibt es dabei jedoch das Problem, dass eine befriedigende Führung für den Hochdruckschlauch oder das Steuerkabel nicht gewährleistet ist. Außerdem ist ein Nachteil, dass am Kanaleinstieg gewöhnlich nur ein begrenzter Raum zur Verfügung steht, so dass jede Einrichtung, die zusätzlich zu der Kabelführungsbogen angebracht wird, zu Platzproblemen führt.

Der Erfindung liegt demgegenüber die Aufgabe zugrunde, eine sichere Führung für den Hochdruckschlauch bei einer Kanalreinigung oder das Steuerkabel von Kanalrohr-Robotern bei einer Reparatur zu gewährleisten und dafür zu sorgen, dass bei der Reinigung und/oder Reparatur des Kanalrohres die Reinigungseinrichtung, die Reparatureinrichtung oder bereits vorhandene Installationen nicht beschädigt werden.

Zur Lösung dieser Aufgabe weist der eingangs erwähnte Führungsbogen die Merkmale des Kennzeichnen den Teils des Anspruchs 1 auf. Durch diese Ausgestaltung des Führungsbogens wird zum einen eine sichere Führung des Hochdruckschlauches oder des Steuerkabels gewährleistet, und es wird keine zusätzliche Installation erforderlich, um den Hochdruckschlauch oder das Steuerkabel in das Kanalrohr einzuführen. Da der Kanalführungsbogen eine integrierte oder aufsteckbare Führungsrille für den Hochdruckschlauch beziehungsweise das Steuerkabel aufweist, gibt es auch keine Platzprobleme beim Einstieg zu dem Kanal, weil der Kabelführungsbogen sowohl die Funktion der Führung des Nachrichtenkabels als auch der Führung des Hochdruckschlauches beziehungsweise des Steuerkabels übernimmt.

Eine vorteilhafte Ausgestaltung des Kabelführungsbogens ist dadurch gekennzeichnet, dass eine Kabelführungsrille in einer Wandung oder in einem Boden der Schlauchführungsrille vorgesehen ist. Durch diese Anordnung der Kabelführungsrille wird sichergestellt, das der Hochdruckschlauch beziehungsweise das Steuerkabel über den Kabelführungsbogen laufen können, ohne das Nachrichtenkabel zu berühren und damit zu beschädigen.

Eine weitere vorteilhafte Ausgestaltung des Kabelführungsbogens ist dadurch gekennzeichnet, dass mehrere Kabelführungsrillen in einer Wandung oder einem Boden der Schlauchführungsrille vorgesehen sind. Damit wird die Funktionalität des Kabelführungsbogen ganz erweitert, indem er nicht nur zur Führung eines einzelnen Nachrichtenkabels sondern zur Führung mehrerer Kabel einsetzbar ist. Da der Hochdruckschlauch beziehungsweise das Steuerkabel einen erheblich größeren Durchmesser als die Nachrichtenkabel haben, gibt es auch keine Platzprobleme in der Wandung oder dem Boden der Schlauchführungsrille, so dass problemlos mehrere Nachrichtenkabel in einem einzigen Kabelführungsbogen geführt werden können.

Eine weitere vorteilhafte Ausgestaltung des Kabelführungsbogens ist dadurch gekennzeichnet, dass die Tiefe der Kabelführungsrille größer ist als der Durchmesser des Nachrichtenkabels, um sicherzustellen, dass keine Berührung zwischen dem Hochdruckschlauch beziehungsweise dem Steuerkabel und dem oder den Nachrichtenkabel(n) stattfindet.

Eine weitere vorteilhafte Ausgestaltung des Kabelführungsbogens ist dadurch gekennzeichnet, dass er mehrere scheibenförmige Teile aufweist, die zur Bereitstellung der Kabelführungsrille unterschiedliche Radien und Dicken haben. Auf diese Weise kann der Kabelführungsbogen aus einzelnen Bausteinen (Scheiben) aufgebaut werden, was einerseits die Fertigung erleichtert und andererseits eine Flexibilität bei der Zusammenstellung des Kabelführungsbogens zur Folge hat. Wenn beispielsweise Nachrichtenkabel unterschiedlicher Durchmesser von dem Kabelführungsbogen geführt werden sollen, müssen lediglich die Bauteile (Scheiben), die für die Breite der Kabelführungsrille sorgen, breiter oder schmaler gewählt werden.

Eine weitere vorteilhafte Ausgestaltung des Kabelführungsbogens ist dadurch gekennzeichnet, dass der Kabelführungsbogen mehrere scheibenförmige Teile, nämlich einen Innenteil und zwei Außenteile, aufweist, und dass der Innenteil zur Bildung der Schlauchführungsrille einen kleineren Radius als die beiden Außenteile aufweist. Dadurch wird eine besonders einfache und zweckmäßige Form des Kabelführungsbogens gewährleistet.

Eine weitere vorteilhafte Ausgestaltung des Kabelführungsbogens ist dadurch gekennzeichnet, dass an einer radial außenliegenden Fläche des Innenteils mehrere Kabelführungsrillen vorgesehen sind, um in einfacher und vorteilhafter Weise die Funktionalität des Kabelführungsbogens auf mehrere Kabel zu erweitern.

Eine weitere vorteilhafte Ausgestaltung des Kabelführungsbogens ist dadurch gekennzeichnet, dass der Kabelführungsbogen einen halbkreisförmigen Innenteil mit einer oder mehreren Kabelführungsrillen und einen auf den Innenteil aufsteckbaren Führungsteil mit der Schlauchführungsrille aufweist. Diese Ausgestaltung gibt die Möglichkeit der Nachrüstung. Ferner kann der Führungsteil auch als Montagehilfe bei der Kabelinstallation dienen, indem der Führungsteil nach dem Einlegen der Kabel in die Kabelführungsrille aufgesteckt wird und dadurch die Kabel wenigstens vorläufig fixiert, bis die Kabel durch die übliche Abspannung festgelegt sind.

Eine weitere vorteilhafte Ausgestaltung des erfindungsgemäßen Kabelführungsbogens ist dadurch gekennzeichnet, dass der Führungsteil sich über ein Viertel eines Kreises erstreckt. Dadurch ergibt sich nicht nur eine Materialersparnis sondern auch eine bessere Handhabung bei der Montage und als Montagehilfe, wie oben beschrieben.

Eine weitere vorteilhafte Ausgestaltung des erfindungsgemäßen Kabelführungsbogens ist dadurch gekennzeichnet, dass der Innenteil beidseitig einen Ansatz aufweist, auf den sich der Führungsteil abstützt. Hiermit wird in vorteilhafter Weise der Führungsteil in seiner Lage gegenüber dem Innenteil fixiert und positioniert.

Schließlich ist eine weitere vorteilhafte Ausgestaltung des erfindungsgemäßen Kabelführungsbogens dadurch gekennzeichnet, dass der Innenteil und der Führungsteil durch einen Bolzen miteinander verbunden sind, was die Montage vereinfacht und eine sichere Verbindung zwischen Führungsteil und Innenteil garantiert.

Ausführungsbeispiele der Erfindung werden nun anhand der beiliegenden Zeichnungen beschrieben. Es zeigen:
- Figur 1: eine zum Teil geschnittene Seitenansicht eines Kabelführungsbogens mit aufgelegtem Hochdruckschlauch;
- Figur 2: eine Seitenansicht eines Kabelführungsbogens von Figur 1 mit Blickrichtung senkrecht zu der Ansicht von Figur 1, wobei ein Hochdruckschlauch und ein Nachrichtenkabel über den Kabelführungsbogen geführt sind;
- Figur 3: eine Seitenansicht einer weiteren Ausführungsform eines Kabelführungsbogens mit Blickrichtung wie in Figur 2;
- Figur 4: eine weitere Ausführungsform eines Kabelbogens mit Kabelführungsrillen für drei Nachrichtenkabel mit Blickrichtung wie in Figur 2;
- Figur 5: eine Seitenansicht eines weiteren Ausführungsbeispiels eines Kabelführungsbogens mit einem Innenteil und einem Führungsteil;
- Figur 6: eine Draufsicht auf den Innenteil von Figur 5; und
- Figur 7: eine Draufsicht auf den Kabelführungsbogen von Figur 5 mit Blickrichtung von links in Figur 5.

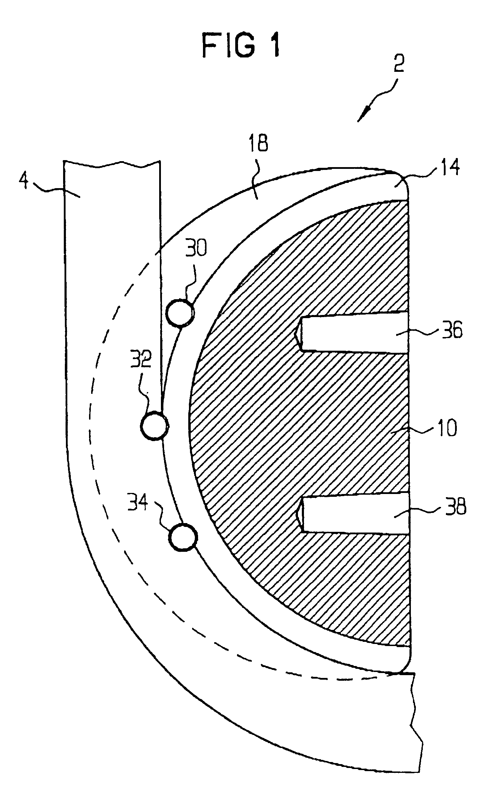

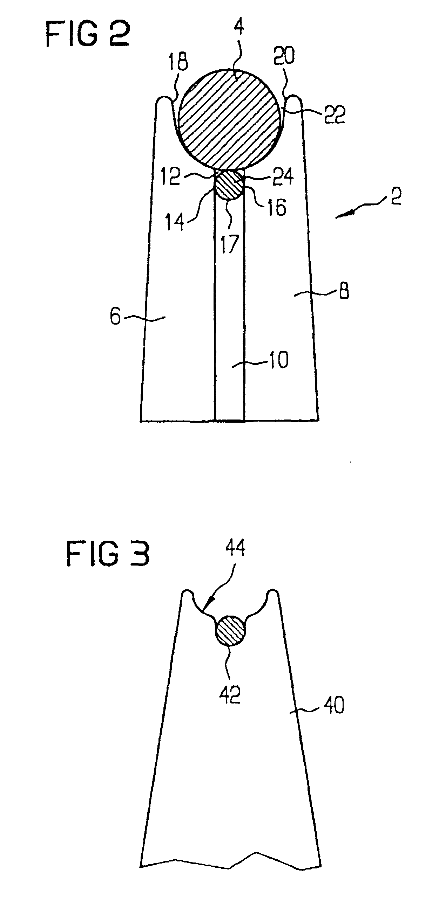

In Figur 1 ist ein Kabelführungsbogen 2 gezeigt, über den ein 'Hochdruckschlauch 4 geführt ist. Wie in Figur 2 dargestellt, besteht der Kabelführungsbogen aus zwei Seitenteilen 6,8 und einem Mittelteil 10, die einstückig miteinander ausgebildet oder gespritzt sein können oder aus einzelnen Scheiben aufgebaut sein können, wie oben erwähnt wurde.

Der Mittelteil 10 hat einen kleineren Radius als die Außenteile auf Ihrer Innenseite, so dass eine Kabelführungsrille 12 durch die Seitenwände 14,16 der beiden Außenteile 6,8 und eine Rille 17 an dem Außenrand des Mittelteils 10 gebildet wird. Die Außenteile 6,8 haben innen abgerundete Backen 18,20, die eine Schlauchführungsrille 22 für den Hochdruckschlauch 4 bilden. In der Kabelführungsrille 12 von Figur 2 ist noch ein Nachrichtenkabel 24 im Schnitt dargestellt, und es ist ersichtlich, dass die Kabelführungsrille 12 etwas tiefer ist als der Durchmesser des Nachrichtenkabels 24, so dass keine Berührung zwischen dem Nachrichtenkabel 24 und dem Hochdruckschlauch 4 stattfindet.

In Figur 1 sind noch drei durchgehende Öffnungen 30,32,34 gezeigt, die durch den Kabelführungsbogen 2 senkrecht zur Kabelführungsrille 12 und am Außenumfang der Kabelführungsrille 12 angeordnet sind. Diese Öffnungen beziehungsweise durch diese gesteckte Bolzen dienen als Montagehilfe beim Verlegen des Nachrichtenkabels 24, wobei die Kabel durch die Bolzen in die Öffnungen 30,32,34 gesteckt werden, nachdem die Kabel in die Kabelführungsrillen eingelegt worden sind und bevor die Kabel in üblicher Weise abgespannt sind.

In Figur 1 sind schließlich noch zwei Blindöffnungen 36,38 dargestellt, die in der Zeichenebene von Figur 1 liegen und zur Montage des Kabelführungsbogens 2 im Einstiegsschacht zum Kanalrohr dienen.

Figur 3 zeigt ein Ausführungsbeispiel eines Kabelführungsbogens mit Blickrichtung wie in Figur 2. Der Kabelführungsbogen 40 ist einstückig ausgebildet und weist an seinem Außenrand eine Kabelführungsrille 42 und eine Schlauchführungsrille 44 auf. Ansonsten kann der Kabelführungsbogen 40 so ausgebildet sein, wie im Zusammenhang mit Figur 1 beschrieben wurde.

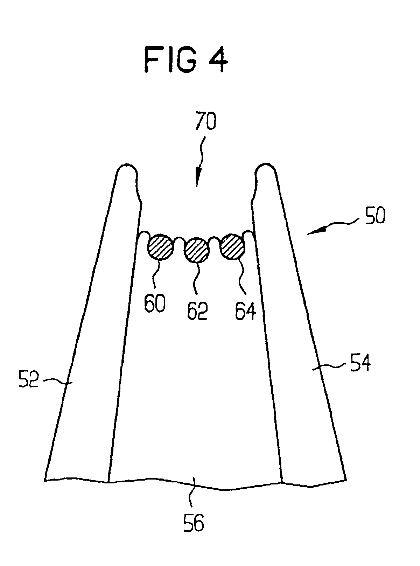

Figur 4 zeigt ein Ausführungsbeispiel des erfindungsgemäßen Kabelführungsbogens 50 mit zwei Außenteilen 52,54 und einem Innenteil 56, der drei Kabelführungsrillen 60,62,64 aufweist. Der Innenteil 56 und zwei über den Innenteil hinausstehende Backen 66,68 des einen beziehungsweise anderen Außenteils 52,54 bilden eine Schlauchführungsrille 70. Der Innenteil 56 und die Außenteile 52,54 werden durch einen Bolzen (nicht gezeigt) zusammengehalten.

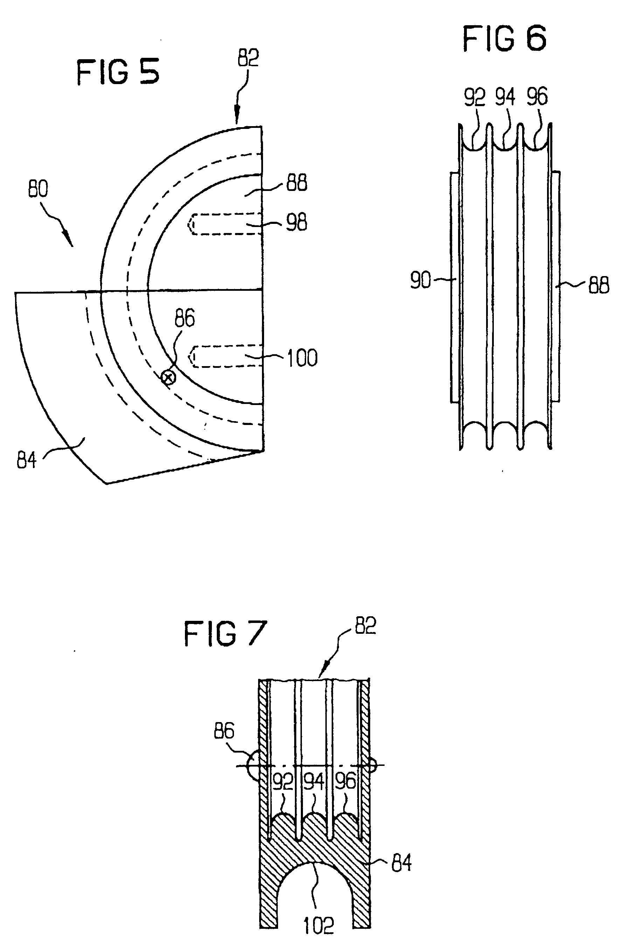

Figur 5 zeigt die Seitenansicht eines weiteren Ausführungsbeispieles des erfindungsgemäßen Kabelführungsbogens 80. Der Kabelführungsbogen 80 umfaßt einen Innenteil 82 und einen Führungsteil 84, der auf den Innenteil 82 aufgesteckt und durch einen Bolzen 86 damit verbunden ist. Der Innenteil 82 ist ein Halbbogen und hat, wie in Figur 6 gezeigt ist, beidseitig einen Ansatz 88,90, an dem der Führungsteil 84 mit seinem Innenradius angreift, wenn der Führungsteil 84 auf den Innenteil 82 gesteckt ist, wie in Figur 5 gezeigt ist.

Der Innenteil 82 hat Kabelführungsrillen 92,94,96 für die Kabel (Figur 6) sowie zwei Montagebohrungen 98,100 zur Montage des Kabelführungsbogens in einem Schacht.

Figur 7 zeigt schließlich eine Seitenansicht des Kabelführungsbogens von Figur 5 mit Blickrichtung von links in Figur 5. Danach weist der Führungsteil 84 eine Schlauchführungsrille 102 auf, ist auf den Innenteil 82 aufgesteckt und durch den Bolzen 86 fixiert.

In der vorhergehenden Beschreibung der Ausführungsbeispiele wird nur von Schlauchführungsrillen gesprochen. Selbstverständlich können die Schlauchführungsrillen auch zur Führung von Steuerkabeln für Kanalrohr-Roboter verwendet werden oder für andere oder für andere schlauch- oder kabelförmige Gebilde, die in das Kanalrohr bei installierten Nachrichtenkabeln eingeführt werden müssen.

## Patentansprüche

1. Führungsbogen (2) mit wenigstens einer ersten Führungsrille (12; 42;52,54,56; 60,62,64; 92,94,96) zur Aufnahme und Umlenkung eines Nachrichtenkabels (24),
**dadurch gekennzeichnet, dass**
der Führungsbogen (2) eine zweite Führungsrille (22,44,70,102) zur Aufnahme eines schlauch- oder kabelförmigen Gebildes aufweist und dass die erste Führungsrille (12; 42;52,54,56; 60,62,64; 92,94,96) in der zweiten Führungsrille (22,44,70,102) verläuft.

2. Führungsbogen nach Anspruch 1,
**dadurch gekennzeichnet, dass**
die erste Führungsrille (12;42;52,54,56; 60,62,64;92,94,96) in einer Wandung oder in einem Boden der zweiten Führungsrille (22,44,70,102) verläuft.

3. Führungsbogen nach Anspruch 1,
**dadurch gekennzeichnet, dass**
mehrere erste Führungsrillen (52, 54, 56; 60, 62, 64; 92,94,96) in einer Wandung oder einem Boden der zweiten Führungsrille (22,44,70,102) vorgesehen sind.

4. Führungsbogen nach einem der vorhergehenden Ansprüche,
**dadurch gekennzeichnet, dass**
die Tiefe der ersten Führungsrille (12; 42; 52,54,56; 60,62,64;92,94,96) derart ausgelegt ist, dass sie größer als der Durchmesser des zu führenden Nachrichtenkabels (24) ist.

5. Führungsbogen nach einem der vorhergehenden Ansprüche,
**dadurch gekennzeichnet, dass**
er mehrere scheibenförmige Teile aufweist, die zur Bereitstellung der ersten Führungsrille (12; 42; 52,54,56; 60,62,64;92,94,96) unterschiedliche Radien und Dicken haben.

6. Führungsbogen nach einem der Ansprüche 1 bis 4,
**dadurch gekennzeichnet, dass**
er mehrere scheibenförmige Teile, nämlich einen Innenteil (56) und zwei Außenteile (52,54), aufweist, und dass der Innenteil zur Bildung der zweiten Führungsrille (22) einen kleineren Radius als die beiden Außenteile (52,54) aufweist.

7. Führungsbogen nach Anspruch 6,
**dadurch gekennzeichnet, dass**
an einer radial außenliegenden Fläche des Innenteils mehrere erste Führungsrillen vorgesehen sind.

8. Führungsbogen nach einem der Ansprüche 1 bis 4,
**dadurch gekennzeichnet, dass**
er einen halbbogenförmigen Innenteil (82) mit einer oder mehreren ersten Führungsrillen (92,94,96) und einen auf den Innenteil (82) aufsteckbaren Führungsteil (84) mit der zweiten Führungsrille (102) aufweist.

9. Führungsbogen nach Anspruch 8,
**dadurch gekennzeichnet, dass**
der Führungsteil (84) sich über ein Viertel eines Kreises erstreckt.

10. Führungsbogen nach Anspruch 8 oder 9,
**dadurch gekennzeichnet, dass**
der Innenteil (82) beidseitig einen Ansatz (88,90) aufweist, auf dem sich der Führungsteil (84) abstützt.

11. Führungsbogen nach einem der Ansprüche 8 bis 10,
**dadurch gekennzeichnet, dass**
der Innenteil (82) und der Führungsteil (84) durch einen Bolzen (86) miteinander verbunden sind.

## Claims

1. Guide bend (2) having at least a first guide channel (12; 42; 52,54,56; 60,62,64; 92,94,96) for accommodating and deflecting a telecommunications cable (24), **characterized in that** the guide bend (2) has a second guide channel (22,44,70,102) for accommodating a hose-like or cable-like structure, and **in that** the first guide channel (12; 42;52,54,56; 60,62,64; 92,94,96) runs in the second guide channel (22,44,70,102).

2. Guide bend according to Claim 1, **characterized in that** the first guide channel (12; 42;52,54,56; 60,62,64;92,94,96) runs in a wall or in a base of the second guide channel (22,44,70,102).

3. Guide bend according to Claim 1, **characterized in that** a plurality of first guide channels (52,54,56;60,62,64; 92,94,96) are provided in a wall or a base of the second guide channel (22,44,70,102).

4. Guide bend according to one of the preceding claims, **characterized in that** the depth of the first guide channel (12; 42; 52,54,56; 60,62,64; 92,94,96) is such that it is greater than the diameter of the telecommunications cable (24) which is to be guided.

5. Guide bend according to one of the preceding claims, **characterized in that** it has a plurality of panel-like parts which, for providing the first guide channel (12; 42; 52, 54, 56; 60,62,64; 92,94,96), have different radii and thicknesses.

6. Guide bend according to one of Claims 1 to 4, **characterized in that** it has a plurality of panel-like parts, namely an inner part (56) and two outer parts (52,54), and **in that**, for the purpose of forming the second guide channel (22), the inner part has a smaller radius than the two outer parts (52,54).

7. Guide bend according to Claim 6, **characterized in that** a plurality of first guide channels are provided on a radially outer surface of the inner part.

8. Guide bend according to one of Claims 1 to 4, **characterized in that** it has a semicircular inner part (82), with one or more first guide channels (92,94,96), and a guide part (84) which can be plugged onto the inner part (82) and has the second guide channel (102).

9. Guide bend according to Claim 8, **characterized in that** the guide part (84) extends over a quarter of a circle.

10. Guide bend according to Claim 8 or 9,
**characterized in that** the inner part (82) has, on both sides, an extension (88,90) on which the guide part (84) is supported.

11. Guide bend according to one of Claims 8 to 10, **characterized in that** the inner part (82) and the guide part (84) are connected to one another by a bolt (86).

## Revendications

1. Arceau (2) de guidage ayant au moins une première rainure (12 ; 42 ; 52, 54, 56 ; 60, 62 ; 92, 94, 96) de guidage de réception et de renvoi d'un câble (24) de télécommunication, **caractérisé en ce que** l'arceau (2) de guidage a une deuxième rainure (22 ; 44 ; 70 ; 102) de guidage, de réception d'une structure en forme de conduit souple ou de câble et **en ce que** la première rainure (12 ; 42 ; 52, 54, 56 ; 60, 62, 64 ; 92, 94, 96) de guidage s'étend dans la deuxième rainure (22 ; 44 ; 70 ; 102) de guidage.

2. Arceau de guidage suivant la revendication 1,
**caractérisé en ce que** la première rainure (12 ; 42 ; 52, 54, 56 ; 60, 62, 64 ; 92, 94, 96) de guidage s'étend dans une paroi ou dans un fond de la deuxième rainure (22 ; 44 ; 70 ; 102) de guidage.

3. Arceau de guidage suivant la revendication 1,
**caractérisé en ce que** plusieurs premières rainures (52, 54, 56 ; 60, 62, 64 ; 92, 94, 96) de guidage sont prévues dans une paroi ou dans un fond de la deuxième rainure (22 ; 44 ; 70 ; 102) de guidage.

4. Arceau de guidage suivant l'une des revendications précédentes, **caractérisé en ce que** la profondeur de la première rainure (12 ; 42 ; 52, 54, 56 ; 60, 62, 64 ; 92, 94, 96) de guidage est plus grande que le diamètre du câble (24) de télécommunication à guider.

5. Arceau de guidage suivant l'une des revendications précédentes, **caractérisé en ce qu'**il comporte plusieurs parties en forme de disque qui ont, pour la mise à disposition de la première rainure (12 ; 42 ; 52, 54, 56 ; 60, 62, 64 ; 92, 94, 96) de guidage, des rayons et des épaisseurs différents.

6. Arceau de guidage suivant l'une des revendications 1 à 4, **caractérisé en ce qu'**il a plusieurs parties en forme de disque, à savoir une partie (56) intérieure et deux parties (52, 54) extérieures et **en ce que** la partie intérieure a, pour la formation de la deuxième rainure (22) de guidage, un rayon plus petit que les deux parties (52, 54) extérieures.

7. Arceau de guidage suivant la revendication 6, **caractérisé en ce qu'**il est prévu, sur une surface se trouvant radialement à l'extérieur de la partie intérieure, plusieurs premières rainures de guidage.

8. Arceau de guidage suivant l'une des revendications 1 à 4, **caractérisé en ce qu'**il a une partie (82) intérieure en forme de demi-arc, ayant une ou plusieurs premières rainures (92, 94, 96) de guidage et une partie (84) de guidage pouvant être enfilée sur la partie (82) intérieure et ayant la deuxième rainure (102) de guidage.

9. Arceau de guidage suivant la revendication 8, **caractérisé en ce que** la partie (84) de guidage s'étend sur un quart de cercle.

10. Arceau de guidage suivant la revendication 8 ou 9, **caractérisé en ce que** la partie (82) intérieure a des deux côtés un prolongement (88, 90), sur lequel s'appuie la partie (84) de guidage.

11. Arceau de guidage suivant l'une des revendications 8 à 10, **caractérisé en ce que** la partie (82) intérieure et la partie (84) de guidage sont reliées entre elles par un axe (86).
